# EUROPEAN PATENT SPECIFICATION

(11) **EP 3 685 523 B1**
(45) Date of publication and mention of the grant of the patent: **29.12.2021**
(21) Application number: 18773735.8
(22) Date of filing: 17.09.2018
(51) Int. Cl.: H04B 7/185

(54) **WIRELESS COMMUNICATION SYSTEM FOR AIRCRAFTS**
DRAHTLOSKOMMUNIKATIONSSYSTEM FÜR FLUGZEUGE
SYSTÈMES DE COMMUNICATION SANS FIL POUR AÉRONEFS

(30) Priority: 18.09.2017 SE 1751148
(43) Date of publication of application: 29.07.2020
(73) Proprietor: Icomera AB, 411 03 Göteborg (SE)
(72) Inventor: KARLSSON, Mats, 660 50 Vålberg (SE); EKLUND, Peter, 417 64 Göteborg (SE); BJURSTRÖM, Joel, 416 57 Göteborg (SE)
(74) Representative: Lind Edlund Kenamets Intellectual Property AB
(86) International application number: PCT/EP2018/074988
(87) International publication number: WO 2019/053240

(56) References cited:
- WO-A1-99/23769
- WO-A1-2016/073863
- US-A1- 2007 281 705
- US-A1- 2016 013 858

## Description

### TECHNICAL FIELD OF THE INVENTION

The present invention relates to the field of wireless communication technology, and more specifically to a wireless communication system and method particularly suitable for aircrafts, such as helicopters and airplanes.

### BACKGROUND

It is not an understatement that the last few decades have introduced vast improvements and advancements in the field of communication technology. In fact, the advent of the internet, cellular phones and more recently smart phones and tablets has greatly changed the way we communicate and quite possibly accelerated the technological field surrounding these devices. As an inevitable consequence, there is an ever increasing demand for bandwidth in order to satisfy the market need for online connectivity which results in an increased focus on constantly developing and improving the underlying technology and systems in order to accommodate this demand.

Further, there is a rapidly increasing demand from consumers to be able to communicate through mobile phones and other handheld terminals at all times, even while traveling on trains, busses, ships and even aircrafts. This is partially embodied in the increasing availability of in-flight entertainment systems and wireless communication (Wi-Fi, GSM, 3G, LTE, 5G) capability onboard aircrafts.

Wireless communication capability onboard aircrafts is not a new concept, even the earliest commercial aircrafts had rather primitive voice communication capability with ground personnel over shortwave radio, which improved flight safety and enabled accelerated commercialization of air transport. Since then, airborne communication systems have been further improved with advent of radar, computers and data links, which serve to improve in-flight safety as well as the overall traveling experience for passengers.

Still further, in the effort of providing connectivity to high bandwidth communication networks, such as the Internet, for aircrafts, it is known that existing terrestrial cellular networks have potential for cost effective operation. The terrestrial cellular networks are however designed for use by terrestrial equipment (e.g. handheld cell phones) and not for aircrafts. Therefore, successful use of terrestrial networks from aircrafts depends on the ability to handle and work around the assumptions built in to such networks, most predominantly, the assumption that the client device is terrestrial. One of the more prominent consequences of the assumption that the client device is terrestrial is the geographical cell size employed in these networks. The assumptions are accordingly that the client devices will have very limited range, enforced by the fact that the radio propagation path between client devices and base stations is limited by obstructions (buildings, mountains, trees, etc.) and the Earth's horizon. These assumptions are simply no longer valid from an airborne vantage point where the distance to the horizon is much larger, which causes performance degradation in terms of interference between neighboring cells. Therefore, regardless of recent developments of communication platforms for aircrafts, it has proven to be difficult to provide robust, broadband data communication for aircrafts such as airplanes, helicopters and the like. < New p. 2A >

Thus, in view of the above, there is a need for an improved wireless aircraft communication system which provides better capacity, improved reliability while still being cost effective.

### SUMMARY OF THE INVENTION

The invention is as defined in the independent claims.

Further aspects are disclosed in the dependent claims.

WO 99/23769, US 2016/013858 and WO 2016/073863 discloses use of aerial vehicles as an airborne switching node, wherein the aerial vehicle receives data from a cell within a service area/coverage area, and conveys this information to another cell within the same service/coverage area. Thus, the aerial vehicle hereby forms an airborne gateway, to provide connectivity to areas where there is inadequate terrestrial communication infrastructure. To this end, the aerial vehicle travels around a circular (or similarly shaped) orbit above the service/coverage area.

US 2007/281705 is similarly directed to an aircraft functioning as an airborne base station, for use when ground based base stations have become temporarily inoperable, e.g. after hurricanes and the like.

### BRIEF DESCRIPTION OF THE DRAWINGS

For exemplifying purposes, the invention will be described in closer detail in the following with reference to embodiments thereof illustrated in the attached drawings, wherein:
Fig. 1 is a partly exploded perspective view illustration of an aircraft having a wireless communication system in accordance with an embodiment of the present invention;
Fig. 2A is a top view illustration of an aircraft having a wireless communication system in accordance with an embodiment of the present invention;
Fig. 2B is a perspective view illustration of the aircraft in Fig. 2A making a roll maneuver;
Fig. 2C is a perspective view illustration of the aircraft in Fig. 2A making a pitch maneuver;
Figs. 3A - 3E are top view illustrations of an aircraft having a wireless communication system in accordance with another embodiment of the present invention.
Fig. 4 is a schematic flowchart representation of a method in accordance with an embodiment of the present invention.

### DETAILED DESCRIPTION

In the following detailed description, preferred embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention. In the detailed embodiments described in the following are related to airplanes. However, it is to be acknowledged by the skilled reader that the method and system are correspondingly useable on other aircrafts, such as helicopters and the like.

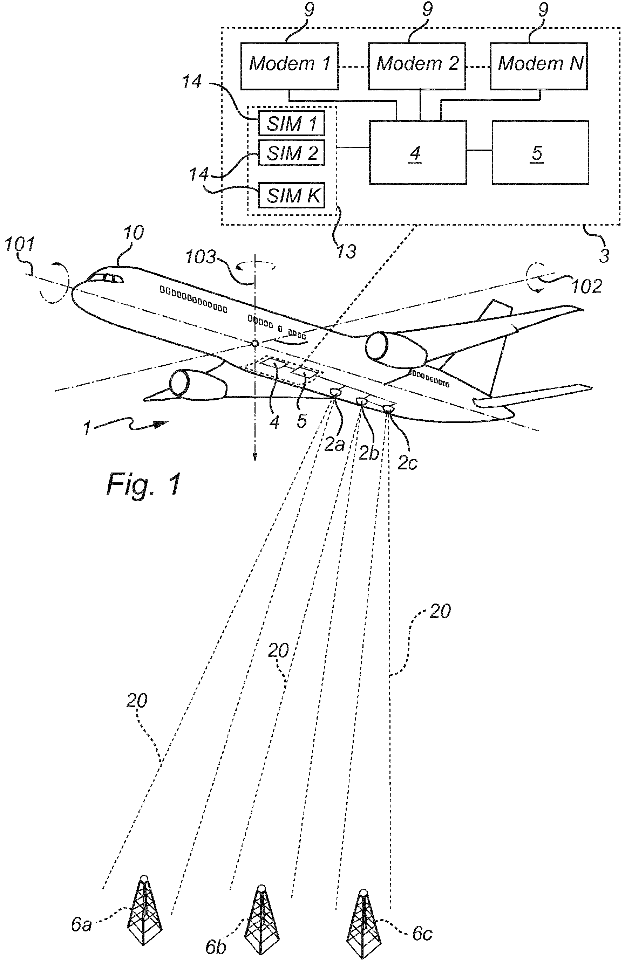

Fig. 1 illustrates a schematic perspective view illustration of an aircraft 10, here in the form of an airplane, having a wireless communication system 1 in accordance with an embodiment of the present invention. The system 1 has a router 3 connected to a plurality of (external) antennas 2a - 2c. The router 3 is configured to transmit and receive wireless data communication to and from a stationary communication server (not shown) outside the aircraft 10 through at least one ground base station 6a - 6c via the antennas 2a - 2c. The antennas 2a - 2c are directional antennas, which may for example be passive beam forming arrays having various polarizations. Moreover, each antenna 2a - 2c may be realized as an antenna orthogonal pair by e.g. using a dual polarized antenna setup with a 90-degree angle between two linear polarizations or using circular left- and right handed polarizations. However, in alternative embodiments spatial diversity may be utilized to achieve orthogonal antenna diversity.

The antennas 2a - 2c may be mounted to an external surface of the aircraft 10, such as e.g. to the aircraft's 10 fuselage. However, the antennas 2a - 2c may also be integrated in the external surface of the aircraft 10. A combination of these two is also feasible.

The system 1 further has a control unit 4, e.g. a microprocessor, which is configured to determine an attitude change of the aircraft 10 by determining a change in at least one of a roll angle, pitch angle and/or yaw angle of said aircraft. The control unit 4 is preferably realized as a software controlled processor. However, the control unit 4 may alternatively be realized wholly or partly in hardware. Moreover, the system 1 may further comprise at least one of a gyroscope and an accelerometer (not shown) so that the attitude change can be determined by means of the gyroscope(s) and/or accelerometer(s). A change is roll angle is to be understood as the aircraft 10 making a rotation about its longitudinal axis 101, also commonly referred to as a roll axis. Similarly, a change in pitch angle is to be understood as the aircraft 10 making a rotation about its lateral/transverse axis 102, also commonly referred to as a pitch axis, and a change in yaw angle is to be understood as the aircraft making a rotation about its vertical axis 103, also commonly referred to as a yaw axis.

The system 1 further comprises an antenna steering unit 5 connected to the control unit 4. The antenna steering unit 5 is configured to steer the antenna beams 20 of each directional antenna based on the determined attitude change of the aircraft 10. Even though the control unit 4 and antenna steering unit 5 are here illustrated as two separate entities, the skilled person readily realizes that these may be integrated into one single unit. The antenna steering unit may for example be in the form of an electronic antenna steering unit which steers the antenna beam(s) 20 by e.g. by switching the antenna elements or changing the relative phases of the RF signals driving the antenna elements. The antennas may as mentioned be in the form of passive beam forming arrays comprising a plurality of antenna elements (not shown). However, additionally or alternatively the antenna steering unit 4 may comprise a mechanical steering element in order to mechanically/physically steer the antennas 2a - 2c, such as e.g. an actuator mounted to the antennas (not shown).

The router 3 further has a plurality of modems 9, where each antenna 2a - 2c, or each antenna orthogonal pair, preferably is assigned and connected to a separate modem 9. In case of the latter each modem 9 is preferably provided with 2 antenna ports for connection to each orthogonal antenna pair. However, each modem may also be provided four or more ports for compliance with MIMO (Multiple Input Multiple Output) systems. Moreover, the router 3 preferably comprises a subscriber identity module pool (SIM pool) 13 which includes a plurality of SIMs 14, and the control unit 8 is accordingly configured to periodically assign SIMs 14 within the SIM pool 13 to any one of the plurality of modems 9 provided within the router 3. In other words, the SIMs 14 form a common SIM pool 13, accessible for all the modems 9. The SIMs 14 are preferably SIM cards, and the SIM pool 13 is realized as a SIM card holder, comprising a plurality of slots for receiving a plurality of SIM cards 14.

The assignment of SIMs to modems at every specific time is preferably determined based on a set of rules in the controller. The set of rules may e.g. be used to assign SIMs to the modems based on information such as in, the current altitude of the aircraft 10, which country the aircraft is currently travelling, the amount of data that has been conveyed by use of the different SIMs, the current price related to conveying data through the different SIMs, the type of data being conveyed, etc.

Furthermore, the router 3 is preferably configured for receiving and transmitting data between an internal local area network (LAN) and a plurality of external wide ware networks (WANs). The LAN is preferably a wireless network, using one or several internal antennas to communicate with clients within the aircraft 10. To this end, it is e.g. feasible to use a distributed antenna, such as a leaky feeder extending through the vehicle, but other types of antennas may also be used. The wireless network may be realized as a wireless local area network (WLAN), and may e.g. operate based on the IEEE 802.11 standard, ("Wi-Fi"), and wherein one or more access point(s) is provided in the aircraft. However, it is also possible to use a wired network within the vehicle.

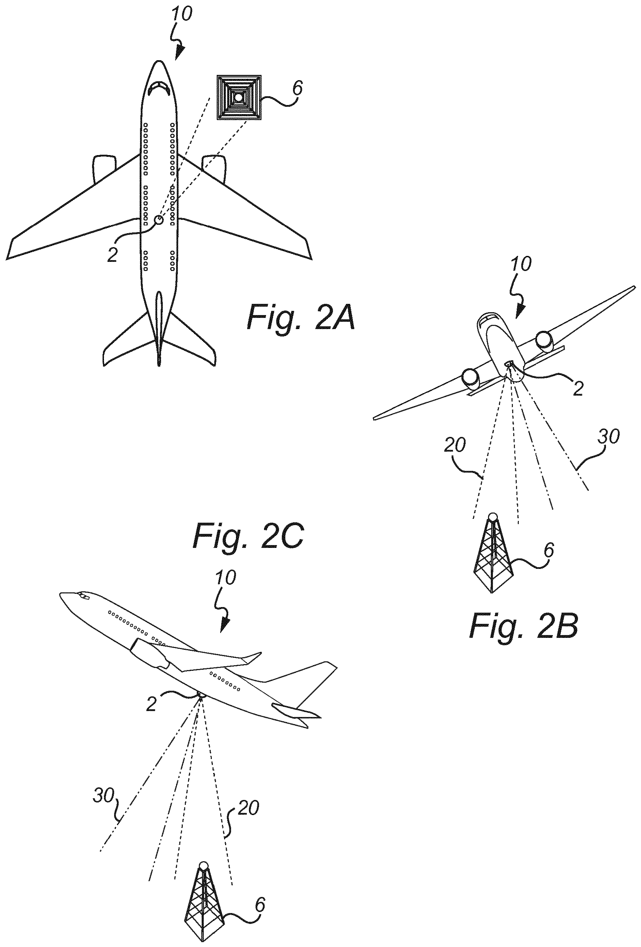

Fig. 2A is a schematic top view illustration of an aircraft 10 having a wireless communication system in accordance with an embodiment of the invention. Here, the aircraft is provided with one directional antenna 2 with an antenna beam or radiation pattern schematically indicated by the "dotdashed" lines 30. More specifically, the dotdashed lines 30 represent the antenna's "bore-sight" direction, i.e. its nominal pointing direction. The antenna beam 30 in Fig. 2A targets a predetermined sector on the ground surface below the aircraft, the sector comprising a ground base station 6, whereby a router within the aircraft 10 which is connected to the antenna 2 can transmit and receive wireless data communication to and from an external stationary communication server.

Fig. 2B is a schematic perspective view illustration of an aircraft from Fig. 2A during a roll maneuver. In other words, the aircraft 10 has changed its roll angle as compared to the horizontal stable orientation illustrated in Fig. 2A. Accordingly, the control unit of the router (not shown in this figure) determined the attitude change of the aircraft, e.g. by means of a gyroscope, whereby the antenna steering unit steered the antenna beam 20 of the antenna 2 in order to compensate for the determined attitude change. The dotdashed lines 30 serve to emphasize that the antenna beam 20 has deviated from its bore-sight direction 30. The steering unit steered the antenna beam 20 of the antenna 2 such that the antenna beam 20 maintains a direction towards the predetermined sector of a ground surface below the aircraft by compensating for the determined roll angle (attitude change).

Similarly, Fig. 2C a schematic perspective view illustration of an aircraft from Fig. 2A during a pitch maneuver, or stated differently, the aircraft 10 has changed its pitch angle as compared to the horizontal stable orientation illustrated in Fig. 2A. Analogously, the control unit of the router (not shown in this figure) determined the attitude change of the aircraft, e.g. by means of a gyroscope, whereby the antenna steering unit steered the antenna beam 20 of the antenna 2 in order to compensate for the determined attitude change. The dotdashed lines 30 serve to emphasize that the antenna beam 20 has deviated from its bore-sight direction 30. The steering unit steered the antenna beam 20 of the antenna 2 such that the antenna beam 20 maintains a direction towards the predetermined sector of a ground surface below the aircraft by compensating for the determined pitch angle (attitude change).

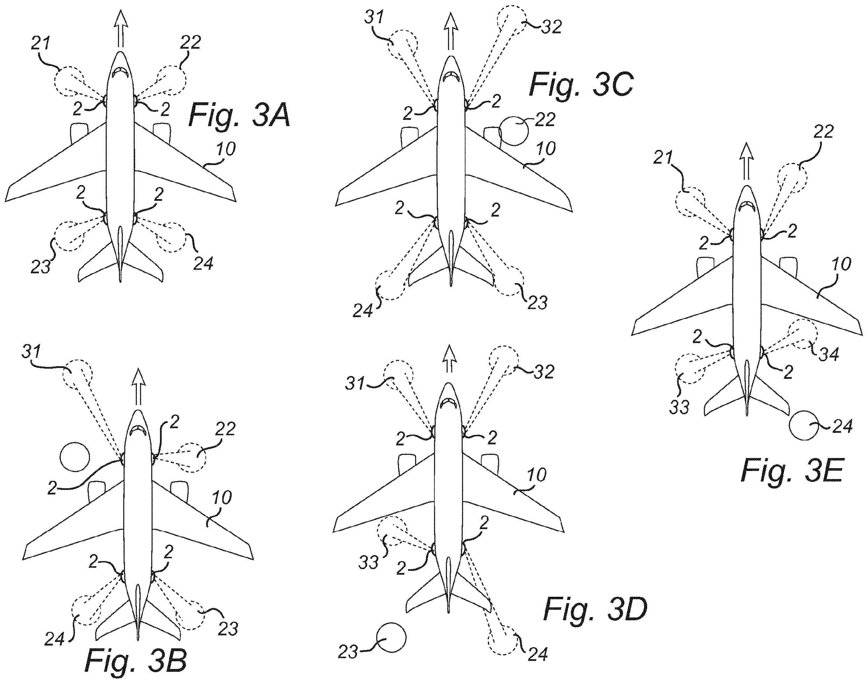

Further, Fig. 3A is a schematic top view illustration of an aircraft 10 having a wireless communication system in accordance with another embodiment of the present invention. The system has a router (not shown) connected to a plurality of directional antennas 2 which define four groups of directional antennas. Here the four groups are spatially separate along the aircraft's 10 fuselage to primarily target four separate quadrants of the ground surface below the aircraft. Each group has a directional antenna 2 and each group is configured to radiate and/or receive radio waves towards/from a selected sector 21-24 of a ground surface below the aircraft 10. The sectors 21-24 are preferably non-overlapping, but may be at least mostly non-overlapping as some overlap may be acceptable.

The series of Figures 3A - 3E serve to show how the antenna steering unit may be utilized to steer the antenna beams so to select new sectors to be targeted during the duration of the flight in order to minimize the otherwise "continuous sweeping" of the ground surface by the antenna beam which may require a large number of handovers per unit of time and therefore reduced network performance. Instead, a control unit of the router may be configured to evaluate a data link quality between each group and at least one ground base station in the selected sector 21-24, and based on this data, the antenna steering unit may be configured to steer the antenna beam(s) towards a new sector 31-34 when the data link quality falls below some threshold value (e.g. due to a too long of a distance between the antenna and the base station(s)). Furthermore, the steering of the antenna beam(s) of each individual group may be performed sequentially one at a time, i.e. one antenna beam is steered towards a new sector while the remaining ones maintain their selected "old" sector, or other configurations are feasible e.g. 2 at a time, 3 at a time and so on depending on the number of groups and other specifications.

Fig. 3B illustrates how the steering unit control the antenna beam of the first group (top left in reference to the illustrated aircraft 10) to select a new sector 31 which is located in front of the aircraft along a planned traveling route. The selection may be based on predefined data provided by a GNSS (e.g. a GPS) and/or by steering the antenna beam along a predefined search pattern (e.g. a spiral path). The antenna beams of the remaining antenna groups are instead steered so to maintain a direction towards their previously selected sectors 22-24. Analogously, Figs. 3C - 3E show a series of how the antenna steering unit sequentially controls the antenna beam of each group so to search for a new sector while the remaining groups' antenna beams are steered so to maintain their direction towards a current sector.

As mentioned other beam steering configurations are feasible and within the scope of the present invention. For example, in reference to the system configuration illustrated in in Figs. 3A - 3E, where the wireless communication system comprises four groups of antennas, the antenna steering unit may be configured to steer the antenna beams of the four groups in pairs. In more detail, the antenna steering unit may be configured to steer diagonal pairs separately, meaning that the top left and bottom right antenna groups are steered towards a new sector while the remaining two are steered so to maintain the antenna beam(s) aimed at their current sectors, and subsequently the top right and bottom left antenna groups are steered towards a new sector while the remaining two are steered so to maintain the antenna beam(s) aimed at their current sectors, c.f. a horse trotting. Left and right are in reference to the illustrated aircraft 10 in Figs. 3A - 3E. However, in an analogous manner the antenna steering unit may be configured to steer front two groups towards a new sector together while the back two are steered so to maintain the antenna beam(s) aimed at their current sectors (front and back being in reference to the nose and tail of the aircraft 10).

As yet another alternative, the four groups may be paired with respect to which side of the aircraft they are arranged, meaning that the top left and bottom left antenna groups are steered towards a new sector while the remaining two are steered so to maintain the antenna beam(s) aimed at their current sectors and subsequently the top right and bottom right antenna groups are steered towards a new sector while the remaining two are steered so to maintain the antenna beam(s) aimed at their current sectors. Left and right are in reference to the illustrated aircraft 10 in Figs. 3A - 3E.

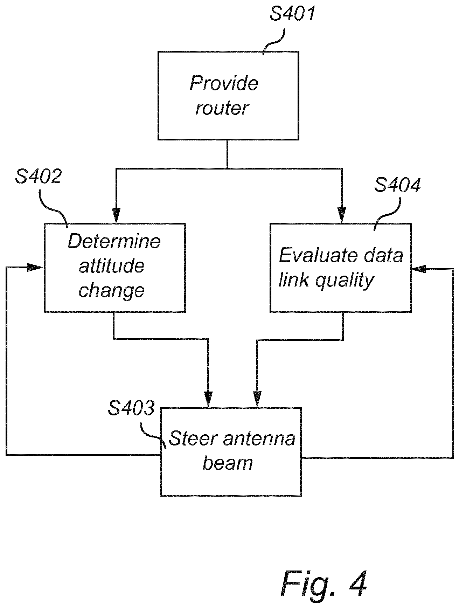

Fig. 4 is a schematic flowchart representation of a method for wireless data communication between a wireless communication system in an aircraft and a stationary communication server outside the aircraft in accordance with an embodiment of the present invention. The method includes a step of providing S401 a router within the aircraft. The router is connected to at least one directional antenna and configured to transmit and receive wireless data communication to and from the stationary communication server outside the aircraft through at least one ground base station via the one or more directional antennas.

Further, an attitude change of the aircraft is determined S402 by determining a change in at least one of a roll angle, pitch angle and/or yaw angle of the aircraft. After which, an antenna beam (or radiation pattern) of the at least one directional antenna is steered S403, based on the determined S402 attitude change of the aircraft. More specifically, the steering S403 of the antenna beam may include maintaining a direction (of the antenna beam) towards a predefined sector of the ground surface below the aircraft by compensating for the determined S402 attitude change. Thereby, the antenna may be kept in communication with any ground base stations in that sector in spite of any attitude changes.

Also, the steering S403 of the antenna beam(s) may be based on an evaluation S404 of a data link quality between each antenna and the one or more base stations which are present in the sector of the ground surface which each antenna is arranged to target. Accordingly, the steering S403 of the antenna beams may be done such that the "evaluated" antennas radiate and/or receive radio waves towards/from a new sector of the ground surface when the data link quality is below a predefined quality threshold value.

The invention has now been described with reference to specific embodiments. However, several variations of the communication system are feasible. For example, the control unit may be considered to include the antenna steering unit, the number of modems may vary, and so on. Moreover, more advanced mathematical algorithms for compensating for yaw changes may be employed in order to take into account the angular moment of the aircraft and the yaw rate-of-change, in order to account for a situation where the yaw changes so rapidly that the beam steering reaches its maximum possible angle, as already exemplified. Such and other obvious modifications must be considered to be within the scope of the present invention, as it is defined by the appended claims. It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements.

## Claims

1. A wireless communication system (1) for 2. use aboard an aircraft (10), said
wireless communication system comprising:
a router (3) connected to an antenna (2, 2a-c), wherein the router (3) is configured to transmit and receive wireless data communication to and from a stationary communication server outside said aircraft through at least one ground base station (6, 6a-c) via said antenna;
wherein said antenna (2, 2a-c) is a directional antenna;
a control unit (4) configured to determine an attitude change of said aircraft (10) by determining a change in at least one of a roll angle, pitch angle and/or yaw angle of said aircraft;
an antenna steering unit (5) connected to said control unit (4) and being configured to steer an antenna beam of said directional antenna (2, 2a-c) based on the determined attitude change of said said aircraft in order to compensate for said determined attitude change, such that said antenna beam (20) maintains a direction towards a predetermined sector (21-24, 31-34) of a ground surface below the aircraft ,
wherein said router (3) is connected to a plurality of directional antennas (2, 2a-c) defining at least two groups of directional antennas, wherein each group comprises at least one directional antenna and each group is configured to radiate and/or receive radio waves towards/from a selected sector (21-24, 31-34) of a ground surface below the aircraft, the selected sectors being at least mostly non-overlapping, and preferably non-overlapping; wherein
said control unit (4) is configured to evaluate a data link quality between each group and said at least one ground base station in said selected sector, and wherein said antenna steering unit (5) is configured to steer said antenna beam(s) to radiate and/or receive radio waves towards/from a new sector (21-24, 31-34) of the ground surface, when said data link quality is below a predefined quality threshold value; and
wherein said steering unit (5) is configured to steer the antenna beam(s) (20) of each group sequentially such that the direction of the antenna beam(s) of at least one group is maintained towards the selected sector(s) while steering the antenna beam(s) of at least one different group to radiate and/or receive radio waves towards/from the new sector.

2. The wireless communication system according to claim 1, wherein said directional antenna (2, 2a-c) is a phased array antenna and wherein said antenna steering unit (5) is configured to electronically steer said antenna beam (20).

3. The wireless communication system according to any one of the preceding claims, wherein said antenna steering unit (5) comprises a mechanical steering element and wherein said antenna steering unit (5) is configured to mechanically steer said antenna beam (20).

4. The wireless communication system according to any one of the preceding claims, wherein said control unit (4) is configured to determine a pitch angle and/or a roll angle of the aircraft, and wherein said antenna steering unit (5) is configured to steer said antenna beam (20) such that it deviates from a nominal bore-sight direction (30) by a deviation angle based on the determined pitch angle and/or roll angle.

5. The wireless communication system according to any one of preceding claims, wherein said control unit (4) is configured to determine a change in yaw angle of the aircraft, and wherein said antenna steering unit (5) is configured to steer said antenna beam (20) such that it deviates from a nominal bore-sight direction (30) by a deviation angle based on the determined change in in yaw angle of the aircraft.

6. The wireless communication system according to any one of the preceding claims, wherein said antenna steering unit (5) is configured to steer the antenna beam(s) (20) of each group based on the determined attitude change of said aircraft in order to compensate for said determined attitude change.

7. The wireless communication system according to any one of the preceding claims, wherein said antenna steering unit (5) is configured to steer the antenna beam(s) of each group, when said aircraft makes a change in attitude, such that said antenna beam(s) (20) in each group maintain(s) the direction towards the selected sector of a ground surface below the aircraft (10) by compensating for said determined attitude change.

8. The wireless communication system according to any one of the preceding claims, wherein said new sector is located in a direction in front of the aircraft (10) along a planned traveling route.

9. The wireless communication system according to any one of the preceding claims, wherein said antenna steering unit (5) is configured to select said new sector by steering said antenna beam(s) (20) along a search pattern until the data link quality is above a predefined establishment threshold value.

10. The wireless communication system according to any one of the preceding claims, further comprising at least one of a gyroscope and an accelerometer and wherein said attitude change is determined by means of said at least one of a gyroscope and an accelerometer.

11. A method for wireless data communication between a wireless communication system (1) in an aircraft (10) and a stationary communication server outside the aircraft, said method comprising:
providing a router (3) within the aircraft, the router being connected to a directional antenna (2, 2a-c) and configured to transmit and receive wireless data communication to and from the stationary communication server outside the aircraft through at least one ground base station (6, 6a-c) via said directional antenna (2, 2a-c);
determining an attitude change of said aircraft (10) by determining a change in at least one of a roll angle, pitch angle and/or yaw angle of said aircraft;
steering an antenna beam (20) of said directional antenna based on the determined attitude change of said aircraft (10), wherein said step of steering the antenna beam (20) comprises maintaining a direction towards a predetermined sector (21-24, 31-34) of a ground surface below the aircraft by compensating for said determined attitude change, wherein said router (3) is connected to a plurality of directional antennas (2, 2a-c) defining at least two groups of directional antennas, wherein each group comprises at least one directional antenna and each group is configured to radiate and/or receive radio waves towards/from a selected sector (21-24, 31-34) of a ground surface below the aircraft (10), the individual sectors being at least mostly non-overlapping, and preferably non-overlapping, the method further comprising:
evaluating a data link quality between each group and said at least one ground base station in said selected sector; and
steering said antenna beam(s) (20) such that said at least one antenna in the evaluated group radiates and/or receives radio waves towards/from a new sector of the ground surface when said data link quality is below a predefined quality threshold value;
wherein the antenna beam(s) of each group are steered sequentially such that the direction of the antenna beam(s) (20) of at least one group is maintained towards the selected sector(s) while steering the antenna beam(s) of at least one different group to radiate and/or receive radio waves towards/from the new sector (21-24, 31-34).

## Patentansprüche

1. Drahtloses Kommunikationssystem (1) Zur Verwendung an Bord eines Flugzeugs (10), wobei das drahtlose Kommunikationssystem umfasst:
einen Router (3), der an eine Antenne (2, 2a-c) angeschlossen ist,
wobei der Router (3) zum Übertragen und Empfangen einer drahtlosen Datenkommunikation zu und von einem stationären Kommunikationsserver außerhalb des Flugzeugs durch wenigstens eine Boden-Basisstation (6, 6a-c) über die Antenne ausgestaltet ist;
wobei die Antenne (2, 2a-c) eine Richtantenne ist;
eine Steuereinheit (4), die zum Bestimmen einer Fluglagenänderung des Flugzeugs (10) durch Bestimmen einer Änderung in wenigstens einem eines Rollwinkels, Einstellwinkels und/oder Windwinkels des Flugzeugs ausgestaltet ist;
eine Antennensteuereinheit (5), die an die Steuereinheit (4) angeschlossen und zum Steuern einer Antennenkeule der Richtantenne (2, 2a-c) basierend auf der bestimmten Fluglagenänderung des Flugzeugs ausgestaltet ist, um die bestimmte Fluglagenänderung derart auszugleichen, dass die Antennenkeule (20) eine Richtung zu einem vorbestimmten Sektor (21-24, 31-34) einer Bodenfläche unterhalb des Flugzeugs beibehält,
wobei der Router (3) an mehrere Richtantennen (2, 2a-c) angeschlossen ist, die wenigstens zwei Gruppen von Richtantennen definieren, wobei jede Gruppe wenigstens eine Richtantenne umfasst und jede Gruppe zum Ausstrahlen und/oder Empfangen von Funkwellen zu/von einem ausgewählten Sektor (21-24, 31-34) einer Bodenfläche unterhalb des Flugzeugs ausgestaltet ist, wobei die ausgewählten Sektoren wenigstens größtenteils nicht überlappend und bevorzugt nicht überlappend sind;
wobei die Steuereinheit (4) zum Beurteilen einer Datenübertragungs-Qualität zwischen jeder Gruppe und der wenigstens einen Basisstation in dem ausgewählten Sektor ausgestaltet ist und wobei die Antennensteuereinheit (5) zum Steuern der Antennenkeule(n) zum Ausstrahlen und/oder Empfangen von Funkwellen zu/von einem neuen Sektor (21-24, 31-34) des Bodenfläche ausgestaltet ist, wobei die Datenübertragungs-Qualität unterhalb eines vorbestimmten Qualitätsgrenzwerts liegt; und
wobei die Steuereinheit (5) zum Steuern der Antennenkeule(n) (20) jeder Gruppe derart sequenziell ausgestaltet ist, dass die Richtung der Antennenkeule(n) wenigstens einer Gruppe zu dem/den ausgewählten Sektor(en) beibehalten ist, während die Antennenkeule(n) wenigstens einer unterschiedlichen Gruppe gesteuert ist/sind, um Funkwellen zu/von dem neuen Sektor auszustrahlen und/oder zu empfangen.

2. Drahtloses Kommunikationssystem nach Anspruch 1, wobei die Richtantenne (2, 2a-c) eine phasengesteuerte Gruppenantenne ist und wobei die Antennensteuereinheit (5) zum elektronischen Steuern der Antennenkeule (20) ausgestaltet ist.

3. Drahtloses Kommunikationssystem nach irgendeinem der voranstehenden Ansprüche, wobei die Antennensteuereinheit (5) ein mechanisches Steuerelement umfasst und wobei die Antennensteuereinheit (5) zum mechanischen Steuern der Antennenkeule (20) ausgestaltet ist.

4. Drahtloses Kommunikationssystem nach irgendeinem der voranstehenden Ansprüche, wobei die Steuereinheit (4) zum Bestimmen eines Einstellwinkels und/oder eines Rollwinkels des Flugzeugs ausgestaltet ist und wobei die Antennensteuereinheit (5) zum Steuern der Antennenkeule (20) derart ausgestaltet ist, dass sie von einer nominalen Hauptstrahlrichtung (30) durch einen Ablenkungswinkel basierend auf der bestimmten Änderung des Einstellwinkels und/oder Rollwinkels abweicht.

5. Drahtloses Kommunikationssystem nach irgendeinem der voranstehenden Ansprüche, wobei die Steuereinheit (4) zum Bestimmen einer Änderung im Windwinkel des Flugzeugs ausgestaltet ist und wobei die Antennensteuereinheit (5) zum Steuern der Antennenkeule (20) derart ausgestaltet ist, dass sie von einer nominalen Hauptstrahlrichtung (30) durch einen Ablenkungswinkel basierend auf der bestimmten Änderung des Einstellwinkels und/oder Rollwinkels abweicht.

6. Drahtloses Kommunikationssystem nach irgendeinem der voranstehenden Ansprüche, wobei die Antennensteuereinheit (5) zum Steuern der Antennenkeule(n) (20) jeder Gruppe basierend auf der bestimmten Fluglagenänderung des Flugzeugs ausgestaltet ist, um die bestimmte Fluglagenänderung auszugleichen.

7. Drahtloses Kommunikationssystem nach irgendeinem der voranstehenden Ansprüche, wobei die Antennensteuereinheit (5) zum Steuern der Antennenkeule(n) jeder Gruppe ausgestaltet ist, wobei das Flugzeug eine Änderung in der Fluglage derart durchführt, dass die Antennenkeule(n) (20) in jeder Gruppe die Richtung zu dem ausgewählten Sektor einer Bodenfläche unterhalb des Flugzeugs (10) durch Ausgleichen der bestimmten Fluglagenänderung beibehält/beibehalten.

8. Drahtloses Kommunikationssystem nach irgendeinem der voranstehenden Ansprüche, wobei der neue Sektor in einer Richtung vor dem Flugzeug (10) entlang einer geplanten Reiseroute angeordnet ist.

9. Drahtloses Kommunikationssystem nach irgendeinem der voranstehenden Ansprüche, wobei die Antennensteuereinheit (5) zum Auswählen des neuen Sektors durch Steuern der Antennenkeule(n) (20) entlang eines Suchmusters ausgestaltet ist, bis die Datenübertragungs-Qualität oberhalb eines vorbestimmten BetriebsGrenzwertes liegt.

10. Drahtloses Kommunikationssystem nach irgendeinem der voranstehenden Ansprüche, weiterhin umfassend wenigstens ein Kreiselgerät und einen Beschleunigungsmesser und wobei die Fluglagenänderung mittels wenigstens eines Kreiselgeräts und eines Beschleunigungsmessers bestimmt ist.

11. Verfahren zur drahtlosen Kommunikation zwischen einem drahtlosen Kommunikationssystem (1) in einem Flugzeug (10) und einem stationären Kommunikationsserver außerhalb des Flugzeugs, wobei das Verfahren umfasst:
Bereitstellen eines Routers (3) innerhalb des Flugzeugs, wobei der Router an eine Richtantenne (2, 2a-c) angeschlossen und zum Übertragen und Empfangen von drahtloser Datenkommunikation zu und von einem stationären Kommunikationsserver außerhalb des Flugzeugs durch wenigstens eine Boden-Basisstation (6, 6a-c) über die Richtantenne (2, 2a-c) ausgestaltet ist;
Bestimmen einer Fluglagenänderung des Flugzeugs (10) durch Bestimmen einer Änderung in wenigstens einem Rollwinkel, Einstellwinkel und/oder Windwinkel des Flugzeugs;
Steuern einer Antennenkeule (20) der Richtantenne basierend auf der bestimmten Fluglagenänderung des Flugzeugs (10), wobei der Steuerschritt der Antennenkeule (20) das Beibehalten einer Richtung zu einem vorbestimmten Sektor (21-24, 31-34) einer Bodenfläche unterhalb des Flugzeugs durch Ausgleichen der bestimmten Fluglagenänderung umfasst, wobei der Router (3) an mehrere Richtantennen (2, 2a-c) angeschlossen ist, die wenigstens zwei Gruppen von Richtantennen definieren, wobei jede Gruppe wenigstens eine Richtantenne umfasst und jede Gruppe zum Ausstrahlen und/oder Empfangen von Funkwellen zu/von einem ausgewählten Sektor (21-24, 31-34) einer Bodenfläche unterhalb des Flugzeugs (10) ausgestaltet ist, wobei die individuellen Sektoren wenigstens größtenteils nicht überlappend und bevorzugt nicht überlappend sind, wobei das Verfahren weiterhin umfasst:
Einschätzen einer Datenübertragungs-Qualität zwischen jeder Gruppe und der wenigstens einen Boden-Basisstation in dem ausgewählten Sektor; und
Steuern der Antennenkeule(n) (20) derart, dass wenigstens eine Antenne in der eingeschätzten Gruppe Funkwellen zu/von einem neuen Sektor der Bodenfläche ausstrahlt und/oder empfängt, wobei die Datenübertragungs-Qualität unterhalb eines vorbestimmten Qualitätsgrenzwertes liegt;
wobei die Antennenkeule(n) jeder Gruppe sequenziell derart gesteuert werden, dass die Richtung der Antennenkeule(n) (20) wenigstens einer Gruppe zu dem/den ausgewählten Sektor(en) beibehalten wird, während die Antennenkeule(n) wenigstens einer unterschiedlichen Gruppe zum Ausstrahlen und/oder Empfangen von Funkwellen zu/von dem neuen Sektor (21-24, 31-34) gesteuert wird/werden.

## Revendications

1. Système de communication sans fil (1) pour une utilisation à bord d'un aéronef (10), ledit système de communication sans fil comprenant :
un routeur (3) connecté à une antenne (2, 2a-c), dans lequel le routeur (3) est configuré pour transmettre et recevoir une communication de données sans fil vers et depuis un serveur de communication fixe à l'extérieur dudit aéronef via au moins une station de base au sol (6, 6a-c) via ladite antenne ;
dans lequel ladite antenne (2, 2a-c) est une antenne directionnelle ;
une unité de commande (4) configurée pour déterminer un changement d'attitude dudit aéronef (10) en déterminant un changement dans au moins l'un d'un angle de roulis, angle de tangage et/ou angle de lacet dudit aéronef ;
une unité d'orientation d'antenne (5) connectée à ladite unité de commande (4) et étant configurée pour orienter un faisceau d'antenne de ladite antenne directionnelle (2, 2a-c) sur la base dudit changement d'attitude déterminé dudit aéronef afin de compenser ledit changement d'attitude déterminé, de telle sorte que ledit faisceau d'antenne (20) conserve une direction vers un secteur prédéterminé (21-24, 31-34) d'une surface au sol sous l'aéronef ;
dans lequel ledit routeur (3) est connecté à une pluralité d'antennes directionnelles (2, 2a-c) définissant au moins deux groupes d'antennes directionnelles, dans lequel chaque groupe comprend au moins une antenne directionnelle et chaque groupe est configuré pour émettre et/ou recevoir des ondes radio vers/depuis un secteur sélectionné (21-24, 31-34) d'une surface au sol sous l'aéronef, les secteurs sélectionnés étant au moins majoritairement non chevauchants, et de préférence non chevauchants ;
dans lequel ladite unité de commande (4) est configurée pour évaluer une qualité de liaison de données entre chaque groupe et ladite au moins une station de base au sol dans ledit secteur sélectionné, et dans lequel ladite unité d'orientation d'antenne (5) est configurée pour orienter ledit ou lesdits faisceau(x) d'antenne pour rayonner et/ou recevoir des ondes radio vers/depuis un nouveau secteur (21-24, 31-34) de la surface au sol , lorsque ladite qualité de liaison de données est inférieure à une valeur seuil de qualité prédéfinie ; et
dans lequel ladite unité d'orientation (5) est configurée pour orienter le ou les faisceaux d'antenne (20) de chaque groupe de manière séquentielle de telle sorte que la direction du ou des faisceaux d'antenne d'au moins un groupe soit maintenue vers le ou les secteurs sélectionnés tout en orientant le(s) faisceau(x) d'antenne d'au moins un groupe différent pour émettre et/ou recevoir des ondes radio vers/depuis le nouveau secteur.

2. Système de communication sans fil selon la revendication 1, dans lequel ladite antenne directionnelle (2, 2a-c) est une antenne réseau à commande de phase et dans lequel ladite unité d'orientation d'antenne (5) est configurée pour orienter électroniquement ledit faisceau d'antenne (20).

3. Système de communication sans fil selon une quelconque des revendications précédentes, dans lequel ladite unité d'orientation d'antenne (5) comprend un élément d'orientation mécanique et dans lequel ladite unité d'orientation d'antenne (5) est configurée pour orienter mécaniquement ledit faisceau d'antenne (20).

4. Système de communication sans fil selon une quelconque des revendications précédentes, dans lequel ladite unité de commande (4) est configurée pour déterminer un angle de tangage et/ou un angle de roulis de l'aéronef, et dans lequel ladite unité d'orientation d'antenne (5) est configurée pour diriger ledit faisceau d'antenne (20) de telle sorte qu'il s'écarte d'une direction alésage-visée nominale (30) d'un angle de déviation basé sur la base de l'angle de tangage et/ou l'angle de roulis déterminés.

5. Système de communication sans fil selon une des revendications précédentes, dans lequel ladite unité de commande (4) est configurée pour déterminer un changement d'angle de lacet de l'aéronef, et dans laquelle ladite unité d'orientation d'antenne (5) est configurée pour diriger ledit faisceau d'antenne (20) de telle sorte qu'il s'écarte d'une direction de visée (30) par un angle de déviation sur la base du changement déterminé de l'angle de lacet de l'aéronef.

6. Système de communication sans fil selon une quelconque des revendications précédentes, dans lequel ladite unité d'orientation d'antenne (5) est configurée pour orienter le ou les faisceau(x) d'antenne (20) de chaque groupe en fonction du changement d'attitude déterminé dudit aéronef afin de compenser ledit changement d'attitude déterminé.

7. Système de communication sans fil selon une des revendications précédentes, dans lequel ladite unité d'orientation d'antenne (5) est configurée pour orienter le ou les faisceaux d'antenne de chaque groupe, lorsque ledit aéronef effectue un changement d'attitude, de telle sorte que ledit ou lesdits faisceau(x) d'antenne (20) dans chaque groupe maintienne(nt) la direction vers le secteur sélectionné d'une surface au sol sous l'aéronef (10) en compensant ledit changement d'attitude déterminé.

8. Système de communication sans fil selon une quelconque des revendications précédentes, dans lequel ledit nouveau secteur est situé dans une direction en avant de l'aéronef (10) le long d'un itinéraire de déplacement planifié.

9. Système de communication sans fil selon une quelconque des revendications précédentes, dans lequel ladite unité d'orientation d'antenne (5) est configurée pour sélectionner ledit nouveau secteur en orientant ledit ou lesdits faisceau(x) d'antenne (20) le long d'un motif de recherche jusqu'à la qualité de la liaison de données soit au-dessus d'une valeur seuil d'établissement prédéfinie.

10. Système de communication sans fil selon une quelconque des revendications précédentes, comprenant en outre au moins un parmi un gyroscope et un accéléromètre et dans lequel ledit changement d'attitude est déterminé au moyen dudit au moins un parmi un gyroscope et un accéléromètre.

11. Procédé de communication de données sans fil entre un système de communication sans fil (1) dans un aéronef (10) et un serveur de communication fixe à l'extérieur de l'aéronef, ledit procédé comprenant de :
fournir un routeur (3) à l'intérieur de l'avion, le routeur étant connecté à une antenne directionnelle (2, 2a-c) et configuré pour transmettre et recevoir une communication de données sans fil vers et depuis le serveur de communication fixe à l'extérieur de l'aéronef via au moins une station de base au sol (6, 6a-c) via ladite antenne directionnelle (2, 2a-c) ;
déterminer un changement d'attitude dudit aéronef (10) en déterminant un changement d'au moins l'un parmi un angle de roulis, un angle de tangage et/ou un angle de lacet dudit aéronef ;
diriger un faisceau d'antenne (20) de ladite antenne directionnelle sur la base du changement d'attitude déterminé dudit aéronef (10), dans lequel ladite étape d'orientation du faisceau d'antenne (20) comprend le maintien d'une direction vers un secteur prédéterminé (21-24, 31 - 34) d'une surface au sol sous l'aéronef en compensant ledit changement d'attitude déterminé, dans lequel ledit routeur (3) est connecté à une pluralité d'antennes directionnelles (2, 2a-c) définissant au moins deux groupes d'antennes directionnelles, dans lequel chaque groupe comprend au moins une antenne directionnelle et chaque groupe est configuré pour émettre et/ou recevoir des ondes radio vers/depuis un secteur sélectionné (21-24, 31-34) d'une surface au sol sous l'aéronef (10), les secteurs individuels étant au moins majoritairement non chevauchants, et de préférence non chevauchants, le procédé comprenant en outre de :
évaluer une qualité de liaison de données entre chaque groupe et ladite au moins une station de base au sol dans ledit secteur sélectionné ; et
diriger le(s) faisceau(x) d'antenne (20) de telle sorte que ladite au moins une antenne du groupe évalué rayonne et/ou reçoive des ondes radio vers/depuis un nouveau secteur de la surface au sol lorsque ladite qualité de liaison de données est inférieure à une valeur de seuil de qualité prédéfini ;
dans lequel le ou les faisceaux d'antenne de chaque groupe sont orientés séquentiellement de telle sorte que l'orientation du ou des faisceau(x) d'antenne (20) d'au moins un groupe soit maintenue vers le(s) secteur(s) sélectionné(s) tout en dirigeant le(s) faisceau(x) d'antenne d'au moins un groupe différent pour rayonner et/ou recevoir les ondes radio vers/depuis le nouveau secteur (21-24, 31-34).
